# EUROPEAN PATENT APPLICATION

(11) **EP 3 441 175 A1**
(43) Date of publication of application: **13.02.2019**
(21) Application number: 18185011.6
(22) Date of filing: 23.07.2018
(51) Int. Cl.: B23K 9/095, B23K 31/12

(54) **WELD SEQUENCER PART INSPECTOR**

(30) Priority: 24.07.2017 US 201715658209
(71) Applicant: Lincoln Global, Inc., Santa Fe Springs, CA 90670 (US)
(72) Inventor: Daniel, Joseph A., Sagamore Hills, OH Ohio 44067 (US)
(74) Representative: Grosse Schumacher Knauer von Hirschhausen

(57) **Abstract**

Various systems (100, 100A, 100B, 100C, 100X) and methods are provided that allow a weld sequencer (102) to use information provided in generated reports to automatically determine which welds of a part are faulty and configure a welding power source (110) so that a rework of each of the faulty welds can be performed. The weld sequencer (102) retrieves a sequence file associated with the part (190) that includes a sequence of welding operations. For each welding operation in the sequence file that corresponds with a weld that needs repair, the weld sequencer (102) displays a diagram depicting a location on the part of the weld corresponding to the respective welding operation and can set one or more parameters of the welding power source (110) so that the respective welding operation can be performed. Thus, the weld sequencer (102) skips welding operations in the sequence file that correspond with welds that do not need to be repaired or reworked.

## Description

### FIELD OF THE INVENTION

The invention is related to a weld sequencer system according to claim 1 and to a method of reworking welding operations according to claim 8. Embodiments of the present disclosure relate to arc welding and the like. More particularly, certain embodiments of the present disclosure relate to systems and methods for automatically check and repair faulty welds.

### TECHNICAL BACKGROUND

Generally, work cells are used to produce welds or welded parts. There are at least two broad categories of work cells, including robotic work cells and semi-automatic work cells. In robotic work cells, the scheduling and performing of welding operations is largely automated, with little operator involvement. Thus, these cells generally have a relatively low labor cost and a relatively high productivity. However, their repeating operations cannot easily adapt to varying welding conditions and/or sequences.

In contrast, semi-automatic work cells (e.g., work cells involving at least some operator welding) generally provide less automation as compared to robotic work cells and, accordingly, have a relatively higher labor cost and a relatively lower productivity. Nevertheless, there are many instances where using a semi-automatic welding work cell can actually be advantageous over robotic work cells. For example, a semi-automatic welding work cell can more easily adapt to varying welding conditions and/or sequences.

### DESCRIPTION

In order to improve cost and productivity aspects, a weld sequencer system according to claim 1 is described and a method of reworking welding operations according to claim 8. Preferred embodiments are subject of the subclaims. The systems, methods, and devices described herein each have several aspects, no single one of which is solely responsible for its desirable attributes. Without limiting the scope of this disclosure, several non-limiting features will now be discussed briefly.

The systems and methods disclosed herein provide a rework function within the weld sequencer that allows the weld sequencer to use information provided in the generated reports to automatically determine which welds are faulty and configure a welding power source so that a rework of each of the faulty welds can be performed. For example, the weld sequencer can request a user or operator to identify the part to repair. The weld sequencer can then retrieve one or more reports generated for the identified part and analyze the one or more reports to identify potentially faulty welds. The weld sequencer can display information associated with the potentially faulty welds and request the user or operator to inspect such welds (e.g., visually or by taking measurements). The results of the inspection can be recorded and the weld sequencer can analyze the results to identify welds that need repair.

The weld sequencer can then retrieve a sequence file associated with the part that includes a sequence of welding operations. For each welding operation in the sequence file that corresponds with a weld that needs repair, the weld sequencer can display, in a user interface, a diagram depicting a location on the part of the weld corresponding to the respective welding operation and can set one or more parameters of the welding power source so that the respective welding operation can be performed. Thus, the weld sequencer can skip welding operations in the sequence file that correspond with welds that do not need to be repaired. Accordingly, the user or operator can efficiently repair a part by automatically skipping over welding operations that are not needed.

One aspect of the disclosure provides a weld sequencer system. The weld sequencer system comprises a welding power source configured to provide power to an implement to perform welding operations on a part; and a welding sequencer coupled to the welding power source. The welding sequencer is configured to: retrieve a sequence file and a report associated with the part, wherein the sequence file comprises a plurality of welding operations, and wherein the report comprises an indication of whether each welding operation in the plurality of welding operations meets a set of constraints associated with the respective welding operation; and for each welding operation in the plurality of welding operations that does not meet the set of constraints associated with the respective welding operation, display, in a user interface, a diagram depicting a location on the part of a weld associated with the respective welding operation, and set one or more parameters of the welding power source based on the sequence file so that the respective welding operation can be performed.

The weld sequencer system of the preceding paragraph can include any sub-combination of the following features: where the welding sequencer is further configured to set the one or more parameters of the welding power source at a first time, and wherein the welding sequencer is further configured to, for each welding operation in the plurality of welding operations, store data in the report indicating whether the respective welding operation meets the associated set of constraints during operation of the welding power source at a second time before the first time; where the welding sequencer is further configured to, for each welding operation in the plurality of welding operations that does meet the set of constraints associated with the respective welding operation, not display, in the user interface, a diagram depicting a location on the part of a weld associated with the respective welding operation, and not set one or more parameters of the welding power source based on the sequence file so that the respective welding operation can be performed; where the set of constraints comprises a number of standard deviations below a mean weld parameter value and a number of standard deviations above the mean weld parameter value; where the report comprises an indication of whether at least one of a current level, a voltage level, a wire feed speed, a weld time, or a weld operation total time meet the set of constraints; where the part is associated with a unique serial number; and where the welding sequencer is further configured to: receive, from a user, the unique serial number, and retrieve the sequence file and the report based on the unique serial number.

Another aspect of the disclosure provides a method of reworking welding operations. The method comprises retrieving a sequence file associated with a part, wherein the sequence file comprises a plurality of welding operations; retrieving a report associated with the part, wherein the report comprises an indication of whether each welding operation in the plurality of welding operations meets a set of constraints associated with the respective welding operation; and for each welding operation in the plurality of welding operations that does not meet the set of constraints associated with the respective welding operation, displaying, in a user interface, a diagram depicting a location on the part of a weld associated with the respective welding operation, and setting one or more parameters of a welding power source based on the sequence file so that the respective welding operation can be performed.

The method of the preceding paragraph can include any sub-combination of the following features: where setting one or more parameters of a welding power source further comprises setting the one or more parameters of the welding power source at a first time; where the method further comprises, for each welding operation in the plurality of welding operations, storing data in the report indicating whether the respective welding operation meets the associated set of constraints during operation of the welding power source at a second time before the first time; where the method further comprises, for each welding operation in the plurality of welding operations that does meet the set of constraints associated with the respective welding operation: not displaying, in the user interface, a diagram depicting a location on the part of a weld associated with the respective welding operation, and not setting one or more parameters of the welding power source based on the sequence file so that the respective welding operation can be performed; where the set of constraints comprises a number of Standard deviations below a mean weld parameter value and a number of Standard deviations above the mean weld parameter value; where the report comprises an indication of whether at least one of a current level, a voltage level, a wire feed speed, a weld time, or a weld operation total time meet the set of constraints; where the part is associated with a unique serial number; and where retrieving a sequence file further comprises: receiving, from a user, the unique serial number, and retrieving the sequence file based on the unique serial number.

### BRIEF DESCRIPTION OF THE DRAWINGS

FIG. 1 illustrates a block diagram of a welding system that utilizes a welding job sequencer.
FIG. 2 illustrates a block diagram of multiple welding systems.
FIG. 3 is a diagram depicting a process for reworking a weld.
FIGS. 4A-4D illustrate a user interface depicting information that may be displayed to the user or operator to rework a weld.
FIG. 5 is a flowchart depicting an illustrative operation of reworking welding operations.

### DETAILED DESCRIPTION OF SPECIFIC EMBODIMENTS

As described above, robotic work cells and semi-automatic work cells are two broad categories of work cells. In typical semi-automatic work cells, parts are welded according to a welding schedule. The welding schedule can be stored in an electronic form, such as a sequence file, and the sequence file can include functions that represent each step in the welding schedule. For example, a function can include parameter settings for the semi-automatic equipment and visual representations of a weld to be performed and/or the location of the weld on a part.

A computer system, such as a weld sequencer, can execute the sequence file. When executed, an operator can step through the functions in an order determined by the welding schedule. When a function is reached, the weld sequencer can automatically adjust the parameter settings of the semi-automatic equipment to the parameter settings corresponding to the function and display visual representations of the weld corresponding to the function, and the operator can complete the weld.

Unfortunately, because semi-automatic work cells involve at least some operator welding, human error can occur, resulting in suboptimal welds. In some cases, it may be difficult to detect a suboptimal weld just from a visual inspection of the weld. Furthermore, parts are often assembled on a high volume assembly line and it may be undesirable to stop the assembly line to repair a suboptimal weld even if the suboptimal weld can be detected just from a visual inspection of the weld. Thus, the weld sequencer generates reports that provide details on every function and every weld of a specific part. A separate report can be generated for each individual part, even if one part is the same type of part as another. A rework operator (e.g., an operator tasked with reworking or fixing faulty welds) can review the information provided in the reports to repair suboptimal welds.

However, it can be difficult for the rework operator to locate a suboptimal weld, even with the information provided in the report. Furthermore, such review can be cumbersome and lengthy given the large amount of data stored in the reports (and the possibly large number of reports). In fact, there may be some issues with the data in the reports and this data thus should not be included in the review (e.g., the operator did not follow or fully complete the welding schedule, the operator used improper equipment, etc.), but the rework operator has no way of identifying such problematic data. Because of this, rework operators may not fully repair a part (e.g., by allowing faulty welds to pass inspection without any rework).

Accordingly, the systems and methods disclosed herein provide a rework function within the weld sequencer that allows the weld sequencer to use information provided in the generated reports to automatically determine which welds are faulty and configure a welding power source so that a rework of each of the faulty welds can be performed. For example, the weld sequencer can request a user or operator to identify the part to repair. The weld sequencer can then retrieve one or more reports generated for the identified part and analyze the one or more reports to identify potentially faulty welds. The weld sequencer can display information associated with the potentially faulty welds and request the user or operator to inspect such welds (e.g., visually or by taking measurements). The results of the inspection can be recorded and the weld sequencer can analyze the results to identify welds that need repair.

The weld sequencer can then retrieve a sequence file associated with the part that includes a sequence of welding operations. For each welding operation in the sequence file that corresponds with a weld that needs repair, the weld sequencer can display, in a user interface, a diagram depicting a location on the part of the weld corresponding to the respective welding operation and can set one or more parameters of the welding power source so that the respective welding operation can be performed. Thus, the weld sequencer can skip welding operations in the sequence file that correspond with welds that do not need to be repaired. Accordingly, the user or operator can efficiently repair a part by automatically skipping over welding operations that are not needed.

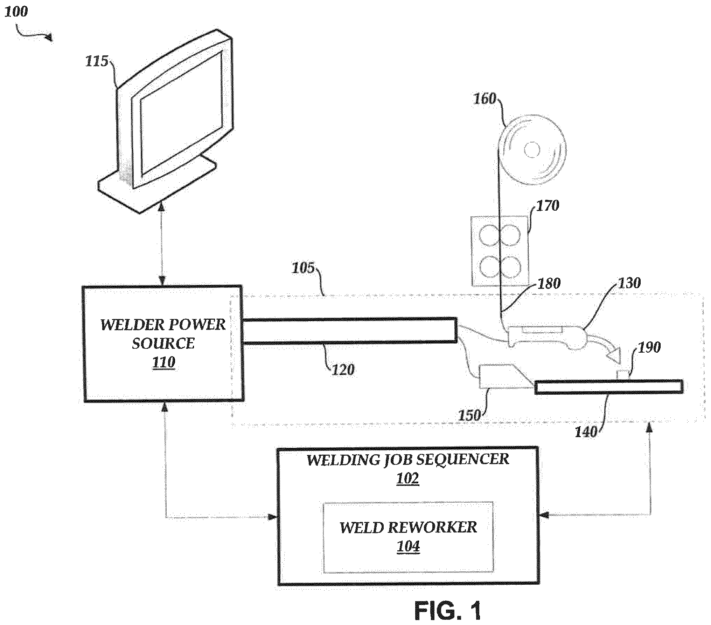

FIG. 1 illustrates a block diagram of a welding system 100 that utilizes a welding job sequencer 102. As used herein, the welding system 100 is also referred to as a welding work cell, where the welding work cell and/or the welding system 100 can produce welds or welded parts. As illustrated in FIG. 1, the welding system 100 includes the welding job sequencer 102, a welding circuit path 105, a welder power source 110, and a display 115 operationally coupled to the welder power source 110 (and/or the welding job sequencer 102). Alternatively, the display 115 may be an integral part of the welder power source 110. For example, the display 115 can be incorporated into the welder power source 110, a stand-alone component (as depicted), or a combination thereof.

The welding system 100 further includes a welding cable 120, a welding tool 130, a workpiece connector 150, a spool of wire 160, a wire feeder 170, and a wire 180. In further embodiments, the welding system 100 further includes a workpiece 140 and a part 190. In embodiment, the wire 180 is fed into the welding tool 130 from the spool 160 via the wire feeder 170. In another embodiment, the welding system 100 does not include the spool of wire 160, the wire feeder 170, and/or the wire 180. Instead, the welding system 100 includes a welding tool comprising a consumable electrode, such as used in, for example, stick welding. In accordance with various embodiments disclosed herein, the welding tool 130 includes at least one of a welding torch, a welding gun, or a welding consumable, for example, but without limitation.

The welding circuit path 105 can run from the welder power source 110 through the welding cable 120 to the welding tool 130, through the workpiece 140 and/or to the workpiece connector 150, and back through the welding cable 120 to the welder power source 110. During operation, electrical current runs through the welding circuit path 105 as a voltage is applied to the welding circuit path 105. In an embodiment, the welding cable 120 comprises a coaxial cable assembly. In another embodiment, the welding cable 120 comprises a first cable length running from the welder power source 110 to the welding tool 130, and a second cable length running from the workpiece connector 150 to the welder power source 110. The welding circuit path 105 can be used by the welding power source 110 to collect weld data (e.g., weld parameter values) as a weld is performed. This information can be forwarded to the welding job sequencer 102 for inclusion in one or more reports.

The welding job sequencer 102 can configure welding equipment (e.g., the welding tool 130) for two or more weld operations to assemble a workpiece (e.g., the workpiece 140). The welding job sequencer 102 is configured to implement a welding sequence defined by a sequence file that includes settings, configurations, and/or parameters to perform two or more welding procedures on the workpiece. In particular, the welding job sequencer 102 can automatically configure the welding equipment to create two or more welds, as described above. Moreover, the welding job sequencer 102 can utilize the welding sequence (e.g., the visual representations of the welds) to help an operator perform the two or more welds. The welding job sequencer 102 can be utilized with a semi-automatic work cell, such as the welding system 100. However, it is to be appreciated and understood that the welding job sequencer 102 can be implemented in a suitable welding environment or system that includes at least welding equipment and an operator to facilitate creating one or more welds.

In an embodiment, the welding job sequencer 102 includes a weld reworker 104 that provides a rework function to allow the welding job sequencer 102 to automatically determine which welds of a welded part are faulty and configure the welding power source 110 so that a rework of each of the faulty welds can be performed. For example, the weld reworker 104 can request a user or operator to identify the part to repair (e.g., via the display 115). The weld reworker 104 can then retrieve one or more reports generated for the identified part and analyze the one or more reports to identify potentially faulty welds. The reports can be stored locally in memory of the welding job sequencer 102 and/or stored remotely in memory of another welding system 100. The weld reworker 104 can cause the display 115 to display information associated with the potentially faulty welds and request the user or operator to inspect such welds (e.g., visually or by taking measurements). The results of the inspection can be recorded by the user or operator via an input device (e.g., a keyboard, a pointing device, etc.) and the weld reworker 104 can analyze the results to identify welds that need repair.

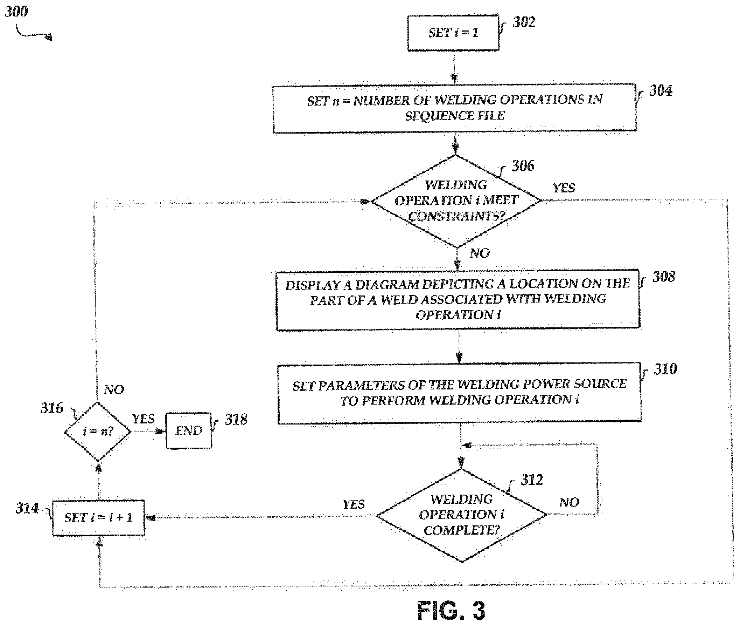

The weld reworker 104 can then retrieve a sequence file associated with the part that includes a sequence of welding operations. For each welding operation in the sequence file that corresponds with a weld that needs repair, the weld reworker 104 can cause the display 115 to display a diagram depicting a location on the part of the weld corresponding to the respective welding operation and can set one or more parameters of the welding power source 110 so that the respective welding operation can be performed. Thus, the weld reworker 104 can cause the welding job sequencer 102 to skip welding operations in the sequence file that correspond with welds that do not need to be repaired. The functions performed by the weld reworker 104 are described in greater detail below with respect to FIGS. 3-5.

It is also to be appreciated that the welding job sequencer 102 can be a stand-alone component (as depicted), can be incorporated into another component of the welding work cell, or a suitable combination thereof. Additionally, the welding job sequencer 102 can be a distributed system, software-as-a-service (SaaS), a cloud-based system, or a combination thereof. The welding job sequencer 102 can include one or more processors that are used to execute stored program instructions, such as instructions provided by a sequence file, and otherwise perform the operations described herein.

In an embodiment, the welding job sequencer 102 is configured to interact with a portion of the welding system 100. For example, the welding job sequencer 102 can interact with at least the welder power source 110, at least a portion of the welding circuit path 105, the spool of wire 160, the wire feeder 170, or a combination thereof. The welding job sequencer 102 automatically adjusts one or more elements of the welding system 100 based on a welding sequence (e.g., the functions in the sequence file), where the welding sequence is utilized to configure the welding system 100 (or an element thereof) without operator intervention in order to perform two or more welding procedures with respective settings or configurations for each welding procedure.

In an embodiment, the welding job sequencer 102 employs a welding sequence (e.g., the parameter settings associated with each function in the sequence file) to automatically configure welding equipment. It is to be appreciated that the welding system 100 or a welding work cell can employ a plurality of welding sequences for the assembly of one or more workpieces. For example, a workpiece can include three welds to complete the assembly in which a first welding sequence can be used for the first weld, a second welding sequence can be used for the second weld, and a third welding sequence can be used for the third weld. Moreover, in such an example, the entire assembly of the workpiece, including the three welds, can be referenced as a welding sequence. In an embodiment, a welding sequence that includes specific configurations or steps can further be included within a disparate welding sequence (e.g., nested welding sequence). A nested welding sequence can be a welding sequence that includes a welding sequence as part of the procedure. Moreover, the welding sequence can include at least one of a parameter, a welding schedule, a portion of a welding schedule, a step-by-step instruction, a portion of media (e.g., images, video, text, and the like), or a tutorial, among others. In general, the welding sequence can be created and employed in order to guide an operator through welding procedure(s) for specific workpieces without the operator manually setting welding equipment to perform such welding procedures.

One or more welder power source(s) 110 aggregate data respective to a respective welding process to which the welder power source 110 is providing power to implement. Such collected data relates to each welder power source 110 and is herein referred to as "weld data." Weld data can include weld parameters and/or information specific to the particular welding process to which the welder power source 110 is supplying power. For example, weld data can be an output (e.g., a waveform, a signature, a voltage, a current, among others), a weld time, a power consumption, a weld parameter for a welding process, a welder power source 110 output for the welding process, and/or the like. In an embodiment, weld data can be utilized with the welding job sequencer 102. For example, weld data can be set by the functions corresponding to the steps of a welding sequence. In another example, weld data can be used as a feedback or a feedforward loop to verify settings.

In an embodiment, the welding job sequencer 102 is a computer operable component that can execute the methodologies and processes disclosed herein. In order to provide additional context for various aspects of embodiments disclosed herein, the following discussion is intended to provide a brief, general description of a suitable computing environment in which the various aspects of embodiments disclosed herein may be implemented. While embodiments have been described above in the general context of computer-executable instructions that may run on one or more computers, those skilled in the art will recognize that embodiments also may be implemented in combination with other program modules and/or as a combination of hardware and/or software. Generally, program modules include routines, programs, components, data structures, etc., that perform particular tasks or implement particular abstract data types.

Moreover, those skilled in the art will appreciate that the methods disclosed herein may be practiced with other computer system configurations, including single-processor or multiprocessor computer systems, minicomputers, mainframe computers, as well as personal computers, hand-held computing devices, microprocessor-based or programmable consumer electronics, and the like, each of which may be operatively coupled to one or more associated devices. The illustrated aspects of the invention may also be practiced in distributed computing environments where certain tasks are performed by remote processing devices that are linked through a communications network. In a distributed computing environment, program modules may be located in both local and remote memory storage devices. For example, a remote database, a local database, a cloud-computing platform, a cloud database, or a combination thereof can be utilized with the welding job sequencer 102.

The welding job sequencer 102 can utilize an exemplary environment for implementing various aspects of the embodiments disclosed herein, including a computer, where the computer includes a processing unit, a system memory and a system bus. The system bus couples system components, including, but not limited to, the system memory to the processing unit. The processing unit may be any of various commercially available processors. Dual microprocessors and other multi-processor architectures also can be employed as the processing unit.

The system bus can be any of several types of bus structures, including a memory bus or memory controller, a peripheral bus, and/or a local bus using any of a variety of commercially available bus architectures. The system memory can include read only memory (ROM) and random access memory (RAM). A basic input/output system (BIOS), including the basic routines that help to transfer information between elements within the welding job sequencer 102, such as during start-up and/or when statistically analyzing reports, is stored in the ROM.

The welding job sequencer 102 can further include a hard disk drive, a magnetic disk drive (e.g., to read from or write to a removable disk), and/or an optical disk drive (e.g., for reading a CD-ROM disk or to read from or write to other optical media). The welding job sequencer 102 can include at least some form of computer readable media. Computer readable media can be any available media that can be accessed by the computer. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other magnetic storage devices, or any other medium which can be used to store the desired information and which can be accessed by the welding job sequencer 102.

Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, Radio Frequency (RF), Near Field Communications (NFC), Radio Frequency Identification (RFID), infrared, and/or other wireless media. Combinations of any of the above should also be included within the scope of computer readable media.

A number of program modules may be stored in the drives and RAM, including an operating system, one or more application programs, other program modules, and program data. The operating system in the welding job sequencer 102 can be any of a number of commercially available operating systems.

In addition, a user may enter commands and information (e.g., weld analysis parameters) into one or more components of the welding system 100 through a keyboard and/or a pointing device, such as a mouse. Other input devices may include a microphone, an IR remote control, a track ball, a pen input device, a joystick, a game pad, a digitizing tablet, a satellite dish, a scanner, and/or the like. These and other input devices are often connected to the processing unit through a serial port interface that is coupled to the system bus, but may be connected by other interfaces, such as a parallel port, a game port, a universal serial bus ("USB"), an IR interface, and/or various wireless technologies. A monitor (e.g., the display 115), or other type of display device, may also be connected to the system bus via an interface, such as a video adapter. Visual output may also be accomplished through a remote display network protocol such as Remote Desktop Protocol, VNC, X-Window System, etc. In addition to visual output, a computer typically includes other peripheral output devices, such as speakers, printers, etc.

A display (in addition to or in combination with the display 115) can be employed with the welding job sequencer 102 to present data that is electronically received from the processing unit (e.g., an alert and/or notification if a weld is faulty or invalid). For example, the display can be an LCD, plasma, CRT, etc. monitor that presents data electronically. Alternatively or in addition, the display can present received data in a hard copy format such as a printer, facsimile, plotter etc. The display can present data in any color and can receive data from the welding job sequencer 102 via any wireless or hard wire protocol and/or standard. In another example, the welding job sequencer 102 and/or the welding system 100 can be utilized with a mobile device, such as a cellular phone, a smart phone, a tablet, a portable gaming device, a portable Internet browsing device, a Wi-Fi device, or a Portable Digital Assistant (PDA), among others.

The computer can operate in a networked environment using logical and/or physical connections to one or more remote computers, such as a remote computer(s). The remote computer(s) can be a workstation, a server computer, a router, a personal computer, microprocessor based entertainment appliance, a peer device or other common network node, and typically includes many or all of the elements described relative to the computer. The logical connections depicted include a local area network (LAN) and a wide area network (WAN). Such networking environments are commonplace in offices, enterprise-wide computer networks, intranets and the Internet.

When used in a LAN networking environment, the computer is connected to the local network through a network interface or adapter. When used in a WAN networking environment, the computer typically includes a modem, or is connected to a communications server on the LAN, or has other means for establishing communications over the WAN, such as the Internet. In a networked environment, program modules depicted relative to the computer, or portions thereof, may be stored in the remote memory storage device. It will be appreciated that network connections described herein are exemplary and other means of establishing a communications link between the computers may be used.

Alternatively or in addition, a local or cloud (e.g., local, cloud, remote, external, among others) computing platform can be utilized for data aggregation, processing, and delivery. For this purpose, the cloud computing platform can include a plurality of processors, memory, and servers in a particular remote location. Under a software-as-a-service (SaaS) paradigm, a single application is employed by a plurality of users to access data resident in the cloud. In this manner, processing requirements at a local level are mitigated as data processing is generally done in the cloud, thereby relieving user network resources. The software-as-a-service application allows users to log into a web-based service (e.g., via a web browser) which hosts all the programs resident in the cloud.

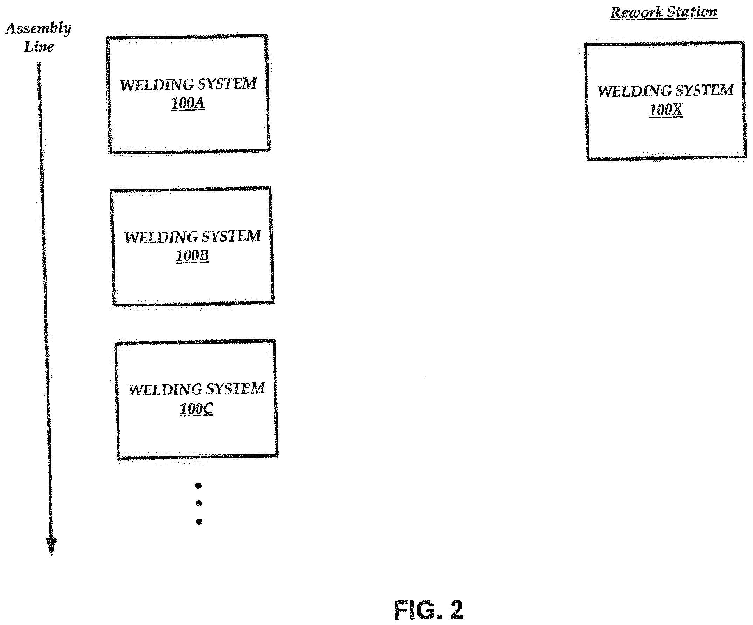

FIG. 2 illustrates a block diagram of multiple welding systems 100A-C and 100X. In an embodiment, welding systems 100A-C are positioned along an assembly line, where a part is welded using welding system 100A, then welded using welding system 100B, and so on. Welding system 100X, however, may not be positioned along the assembly line.

As described herein, some welds can be faulty. Instead of disrupting and/or stopping the assembly line of parts by reworking a faulty weld in one of welding systems 100A-C, a separate welding system (e.g., welding system 100X) outside of the assembly line can be used to rework a faulty weld. Once a part has finished passing through the assembly line, the part can be moved to the rework station. Thus, the part can be re-welded at a different time and independent of the assembly line (e.g., a few days after the part passes through the assembly line). At the rework station, the welding system 100X can include the weld reworker 104 to provide the rework function described herein. Having the welding system 100X at a rework station separate from the assembly line may provide for the more efficient welding of parts, especially with high-volume assembly lines.

FIG. 3 is a diagram depicting a process 300 for reworking a weld. Depending on the embodiment, the process 300 may be performed by various computing devices, such as by the welding job sequencer 102 (e.g., the weld reworker 104). Depending on the embodiment, the process 300 may include fewer and/or additional blocks and the blocks may be performed in an order different than illustrated. The process 300 starts at block 302.

At block 302, a variable i is set to be equal to 1. The variable i may represent a welding operation being performed.

At block 304, a variable n is set to be equal to the number of welding operations in a sequence file. For example, the sequence file may be associated with a part on which welding operations (or rework welding operations) are to be performed.

At block 306, the process 300 determines whether the welding operation i meets certain constraints. For example, the constraints can be visual-based (e.g., based on an appearance of a weld) or measurement-based (e.g., a current level, a voltage level, a wire feed speed, a weld time, a weld operation total time, etc.). For visual-based constraints, the user or operator can provide visual feedback (e.g., via an input device) and the weld reworker 104 can compare the visual feedback with predetermined constraints for the welding operation *i* to determine whether the visual-based constraints are met. For measurement-based constraints, the user or operator can take physical measurements and/or the measurements may be stored in a generated report (e.g., measurements can be taken by the welding tool 130, the welding cable 120, and/or the welding power source 110 during a welding operation and stored in a generated report). The weld reworker 104 can then compare the measurements with predetermined constraints for the welding operation i to determine whether the measurement-based constraints are met. If the constraints are not met, the process 300 continues to block 308. Otherwise if the constraints are met, the process 300 proceeds to block 314 where variable *i* is incremented as described below. Thus, if welding operation *i* meets the constraints, this welding operation is skipped (e.g., the weld reworker 104 does not cause the display 115 to display any information related to the welding operation and/or does not configure the parameters of the welding power source 110 to perform the welding operation) in the sequence file and the weld reworker 104 moves on to the next welding operation.

At block 308, a diagram depicting a location on the part of a weld associated with welding operation *i* is displayed. For example, the diagram can be displayed in the display 115 of the welding system 100X. The diagram may be a photograph of the part, where the photograph focuses on the location of the particular weld and/or includes annotations identifying the location of the particular weld.

At block 310, parameters of the welding power source 110 are set to perform welding operation *i*. For example, because the process 300 proceeded to blocks 308 and 310, the process 300 has determined that the weld associated with welding operation *i* is faulty (e.g., because the constraints were not met). Thus, at the rework station, the welding power source 100 may be configured with the parameters for the welding operation *i* so that the faulty weld can be repaired.

At block 312, the process 300 determines whether welding operation i is complete. For example, the user or operator may select a forward button via an input device to indicate that welding operation *i* is complete. If welding operation i is complete, then the process 300 proceeds to block 314. Otherwise, the process 300 reverts back to block 312.

At block 314, the variable i is incremented by 1. In other words, the weld reworker 104 has determined that a faulty weld has been repaired and that it can move on to the next welding operation in the sequence file that corresponds with a faulty weld.

At block 316, the process 300 determines whether the variable i is equal to the variable n. If the variables are equal, this indicates that the weld reworker 104 has stepped through each of the welding operations in the sequence file and that all faulty welds have been repaired (and/or that there are no more faulty welds that have not been addressed). If the variables are equal, the process 300 moves to block 318 and the process 300 ends. Otherwise, the process 300 reverts back to block 306 and the process 300 is repeated for the next welding operation *i*.

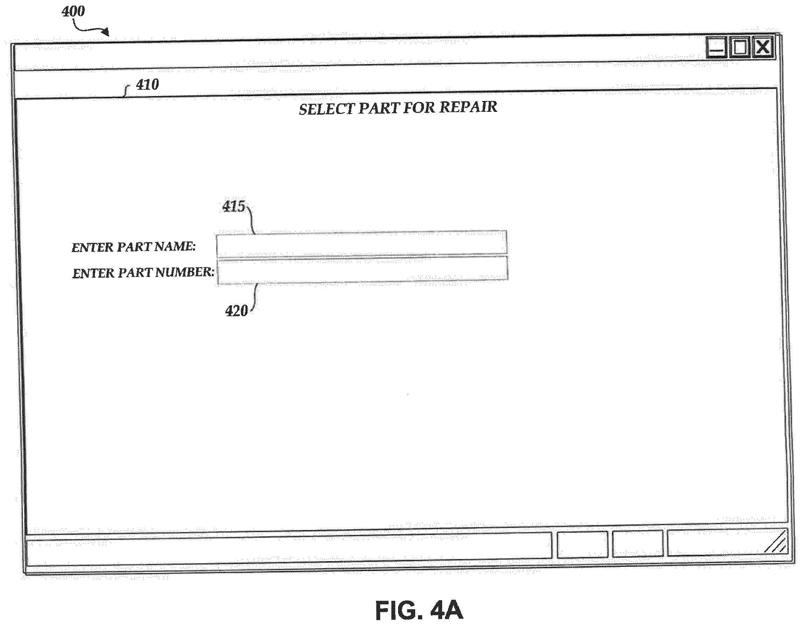

FIGS. 4A-4D illustrate a user interface 400 depicting information that may be displayed to the user or operator to rework a weld. As illustrated in FIG. 4A, the user interface 400 includes a window 410. The window 410 includes a request for the user or operator to enter part information. For example, the user or operator is asked to enter a part name in field 415 and/or to enter a part number in field 420. Using this information, the weld reworker 104 can retrieve one or more reports generated for the identified part.

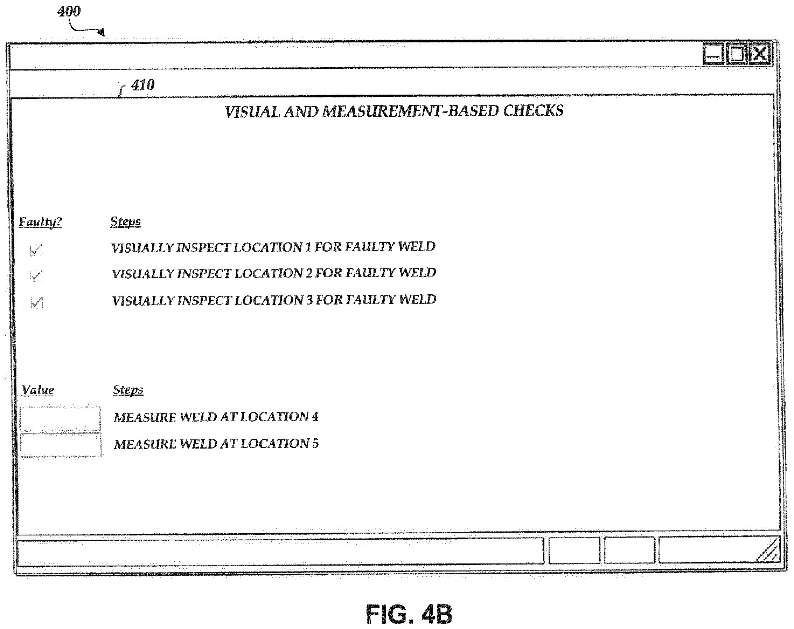

As illustrated in FIG. 4B, the user or operator may then be prompted to perform a visual and/or measurement-based inspection of the part. For example, the user interface 400 can display in the window 410 a set of visual and/or measurement-based steps to complete. The window 410 may also provide boxes and/or fields where the user or operator can enter information associated with each of the steps. For example, the user or operator can check a box to indicate that a weld is faulty based on a visual inspection and/or can enter values based on a measurement taken by the user and/or operator. Using this information (along with the information provided in the retrieved one or more reports), the weld reworker 104 can determine which welds are and are not faulty (e.g., which welds meet and do not meet the predetermined constraints).

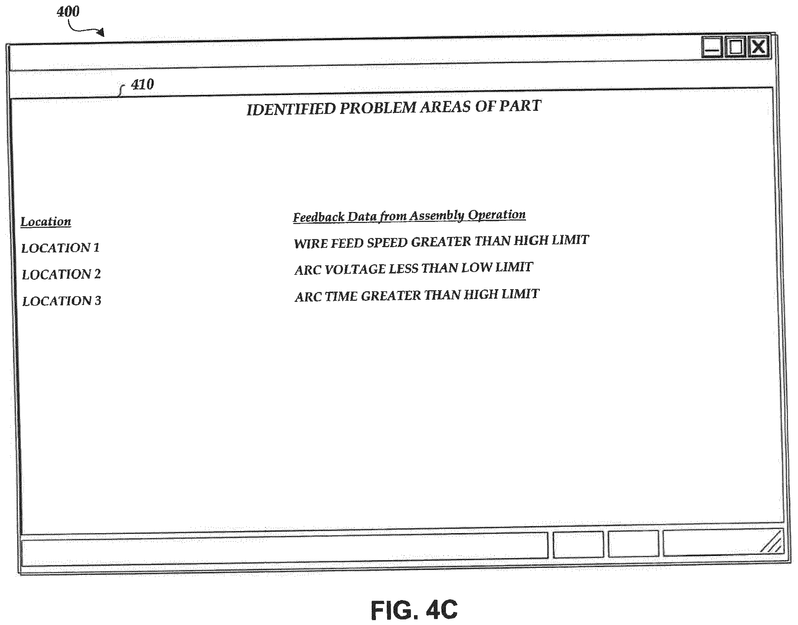

For example, the user interface 400 can display in the window 410 information related to the location of faulty welds on a part and/or any data associated with the faulty weld, as illustrated in FIG. 4C. For example, the data associated with the faulty weld can indicate a reason why the weld is determined to be faulty.

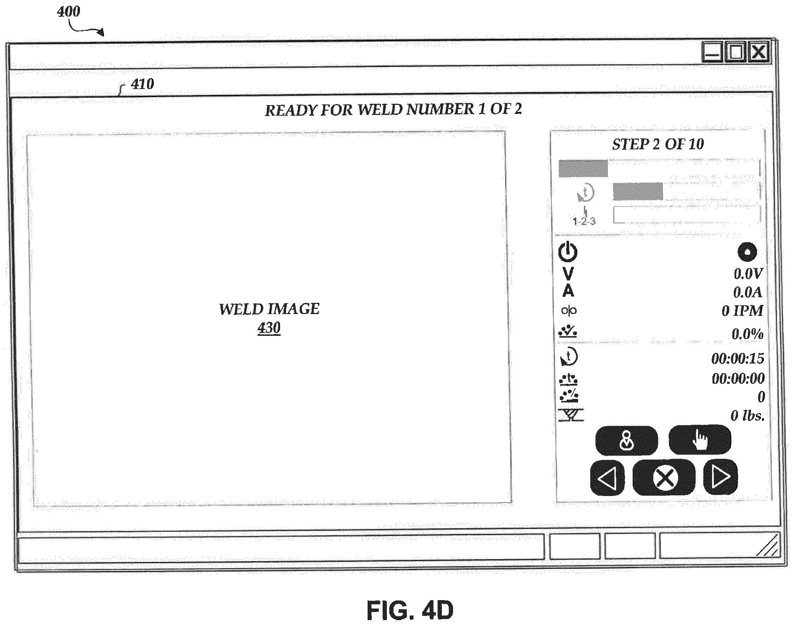

The user interface 400 may also provide information to the user or operator to guide the user or operator in reworking the faulty weld, as illustrated in FIG. 4D. For example, the window 410 can display a weld image 430, which can be a diagram (e.g., an annotated or unannotated photograph, illustration, 3D representation, etc.) of the part and/or weld to be reworked. The window 410 can also display additional information, such as a number of the weld that is being reworked for a given welding operation, the number of welding operations that need to be performed, welding power source 110 parameters for the welding operation being performed (e.g., a current level, a voltage level, a time to perform the weld, etc.), buttons to allow a user or operator to go back to a previous welding operation, to stop a welding operation, and/or to move forward to the next welding operation, and/or the like.

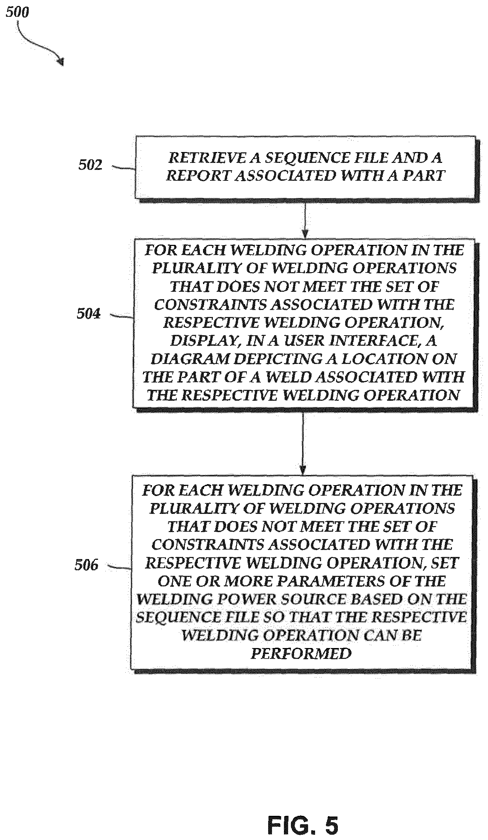

FIG. 5 is a flowchart 500 depicting an illustrative operation of reworking welding operations. Depending on the embodiment, the method of FIG. 5 may be performed by various computing devices, such as by the welding job sequencer 102 (e.g., the weld reworker 104). Depending on the embodiment, the method of FIG. 5 may include fewer and/or additional blocks and the blocks may be performed in an order different than illustrated.

In block 502, a sequence file and a report associated with a part are retrieved. For example, the sequence file and the report can be retrieved based on a part identified by a user or operator. In an embodiment, the report includes an indication of whether each welding operation in the plurality of welding operations meets a set of constraints associated with the respective welding operation.

In block 504, for each welding operation in the plurality of welding operations that does not meet the set of constraints associated with the respective welding operation, display, in a user interface, a diagram depicting a location on the part of a weld associated with respective welding operation. Thus, the weld reworker 104 can skip welding operations in the plurality of welding operations that do meet the set of constraints associated with the respective welding operation such that no diagram depicting a location on the part of a weld associated with these welding operations is displayed.

In block 506, for each welding operation in the plurality of welding operations that does not meet the set of constraints associated with the respective welding operation, set one or more parameters of the welding power source based on the sequence file so that the respective welding operation can be performed. Thus, the weld reworker 104 can skip welding operations in the plurality of welding operations that do meet the set of constraints associated with the respective welding operation such that the welding power source 110 is not set with one or more parameters to perform these welding operations. In an embodiment, the weld reworker 104 concurrently display the diagram and sets the one or more parameters of the welding power source for a welding operation in the plurality of welding operations that does not meet the set of constraints associated with the welding operation.

Each of the processes, methods, and algorithms described in the preceding sections may be embodied in, and fully or partially automated by, code modules executed by one or more computer systems or computer processors comprising computer hardware. The processes and algorithms may be implemented partially or wholly in application-specific circuitry.

The various features and processes described above may be used independently of one another, or may be combined in various ways. All possible combinations and subcombinations are intended to fall within the scope of this disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed example embodiments. The example systems and components described herein may be configured differently than described. For example, elements may be added to, removed from, or rearranged compared to the disclosed example embodiments.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

The term "comprising" as used herein should be given an inclusive rather than exclusive interpretation. For example, a general purpose computer comprising one or more processors should not be interpreted as excluding other computer components, and may possibly include such components as memory, input/output devices, and/or network interfaces, among others.

Any process descriptions, elements, or blocks in the flow diagrams described herein and/or depicted in the attached figures should be understood as potentially representing modules, segments, or portions of code which include one or more executable instructions for implementing specific logical functions or steps in the process. Alternate implementations are included within the scope of the embodiments described herein in which elements or functions may be deleted, executed out of order from that shown or discussed, including substantially concurrently or in reverse order, depending on the functionality involved, as would be understood by those skilled in the art.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general purpose computer comprising one or more processors should not be interpreted as excluding other computer components, and may possibly include such components as memory, input/output devices, and/or network interfaces, among others.

It should be emphasized that many variations and modifications may be made to the above-described embodiments, the elements of which are to be understood as being among other acceptable examples. All such modifications and variations are intended to be included herein within the scope of this disclosure. The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated. The scope of the invention should therefore be construed in accordance with the appended claims and any equivalents thereof.

**REFERENCE NUMBERS**

| | | | |
|---|---|---|---|
| 100 | welding system | 300 | process |
| 100A | welding system | 302 | block |
| 100B | welding system | 304 | block |
| 100C | welding system | 306 | block |
| 100X | welding system | 308 | block |
| 102 | welding job sequencer | 310 | block |
| 104 | weld reworker | 312 | block |
| 105 | welding circuit path | 314 | block |
| 110 | welder power source | 316 | block |
| 115 | display | 400 | user interface |
| 120 | welding cable | 410 | window |
| 130 | welding tool | 415 | field |
| 140 | workpiece | 420 | field |
| 150 | workpiece connector | 430 | weld image |
| 160 | spool of wire | 500 | flowchart |
| 170 | wire feeder | 502 | block |
| 180 | wire | 504 | block |
| 190 | part | 506 | block |

## Claims

1. A weld sequencer system (100, 100A, 100B, 100C, 100X), comprising:
a welding power source (110) configured to provide power to an implement to perform welding operations on a part (190); and
a welding sequencer (102) coupled to the welding power source (110), the welding sequencer configured to:
retrieve a sequence file and a report associated with the part, wherein the sequence file comprises a plurality of welding operations, and wherein the report comprises an indication of whether each welding operation in the plurality of welding operations meets a set of constraints associated with the respective welding operation, and
for each welding operation in the plurality of welding operations that does not meet the set of constraints associated with the respective welding operation,
display, in a user interface (400), a diagram depicting a location on the part of a weld associated with the respective welding operation, and
set one or more parameters of the welding power source based on the sequence file so that the respective welding operation can be performed.

2. The weld sequencer system (100, 100A, 100B, 100C, 100X) of claim 1, wherein the welding sequencer (102) is further configured to set the one or more parameters of the welding power source at a first time, and wherein the welding sequencer (102) is further configured to, for each welding operation in the plurality of welding operations, store data in the report indicating whether the respective welding operation meets the associated set of constraints during operation of the welding power source (110) at a second time before the first time.

3. The weld sequencer system (100, 100A, 100B, 100C, 100X) of claim 1 or 2, wherein the welding sequencer (102) is further configured to, for each welding operation in the plurality of welding operations that does meet the set of constraints associated with the respective welding operation,
not display, in the user interface, a diagram depicting a location on the part of a weld associated with the respective welding operation, and
not set one or more parameters of the welding power source based on the sequence file so that the respective welding operation can be performed.

4. The weld sequencer system (100, 100A, 100B, 100C, 100X) of any of the claims 1 to 3, wherein the set of constraints comprises a number of standard deviations below a mean weld parameter value and a number of standard deviations above the mean weld parameter value.

5. The weld sequencer system (100, 100A, 100B, 100C, 100X) of any of the claims 1 to 4, wherein the report comprises an indication of whether at least one of a current level, a voltage level, a wire feed speed, a weld time, or a weld operation total time meet the set of constraints.

6. The weld sequencer system (100, 100A, 100B, 100C, 100X) of any of the claims 1 to 5, wherein the part is associated with a unique serial number.

7. The weld sequencer system of any of the claims 1 to 6, wherein the welding sequencer is further configured to:
receive, from a user, the unique serial number; and
retrieve the sequence file and the report based on the unique serial number.

8. A method of reworking welding operations, the method comprising:
retrieving a sequence file associated with a part, wherein the sequence file comprises a plurality of welding operations;
retrieving a report associated with the part, wherein the report comprises an indication of whether each welding operation in the plurality of welding operations meets a set of constraints associated with the respective welding operation; and
for each welding operation in the plurality of welding operations that does not meet the set of constraints associated with the respective welding operation,
displaying, in a user interface, a diagram depicting a location on the part of a weld associated with the respective welding operation, and
setting one or more parameters of a welding power source based on the sequence file so that the respective welding operation can be performed.

9. The method of claim 8, wherein setting one or more parameters of a welding power source further comprises setting the one or more parameters of the welding power source at a first time

10. The method of claim 8 or 9, further comprising, for each welding operation in the plurality of welding operations, storing data in the report indicating whether the respective welding operation meets the associated set of constraints during operation of the welding power source at a second time before the first time.

11. The method of any of the claims 8 to 10, further comprising, for each welding operation in the plurality of welding operations that does meet the set of constraints associated with the respective welding operation:
not displaying, in the user interface, a diagram depicting a location on the part of a weld associated with the respective welding operation, and
not setting one or more parameters of the welding power source based on the sequence file so that the respective welding operation can be performed.

12. The method of any of the claims 8 to 11, wherein the set of constraints comprises a number of standard deviations below a mean weld parameter value and a number of standard deviations above the mean weld parameter value.

13. The method of any of the claims 8 to 12, wherein the report comprises an indication of whether at least one of a current level, a voltage level, a wire feed speed, a weld time, or a weld operation total time meet the set of constraints.

14. The method of any of the claims 8 to 13, wherein the part is associated with a unique serial number.

15. The method of any of the claims 8 to 14, wherein retrieving a sequence file further comprises:
receiving, from a user, the unique serial number; and
retrieving the sequence file based on the unique serial number.
